(19) **Europäisches Patentamt**

**European Patent Office**

**Office européen des brevets**

(11) **EP 1 335 005 B1**

(12) **EUROPÄISCHE PATENTSCHRIFT**

(45) Veröffentlichungstag und Bekanntmachung des Hinweises auf die Patenterteilung:
**21.06.2006 Patentblatt 2006/25**

(51) Int Cl.:
*C09D 5/36* (2006.01)      *C08K 9/02* (2006.01)
*C09C 1/00* (2006.01)

(21) Anmeldenummer: **03010900.3**

(22) Anmeldetag: **15.04.1998**

(54) **Farbige Effektpigmente und deren Verwendung**

Coloured effect pigments and their use

Pigments colorés à effets particuliers et leur utilisaton

(84) Benannte Vertragsstaaten:
**CH DE FR GB IT LI**

(30) Priorität: **22.04.1997 CH 93097**

(43) Veröffentlichungstag der Anmeldung:
**13.08.2003 Patentblatt 2003/33**

(62) Dokumentnummer(n) der früheren Anmeldung(en) nach Art. 76 EPÜ:
**98810319.8 / 0 874 026**

(73) Patentinhaber: **Ciba Specialty Chemicals Holding Inc.**
**4057 Basel (CH)**

(72) Erfinder:
• **Bujard, Patrice**
**4153 Reinach (CH)**
• **Bonnard Pillonel, Natacha**
**68510 Uffheim (FR)**
• **Takahashi, Ryuichi**
**Kobe,**
**Hyogo 651-15 (JP)**

(56) Entgegenhaltungen:
EP-A- 0 096 284      EP-A- 0 381 047
EP-A- 0 735 115      WO-A-93/19131
DE-A- 4 341 162      US-A- 5 135 812

Bemerkungen:
Die Akte enthält technische Angaben, die nach dem Eingang der Anmeldung eingereicht wurden und die nicht in dieser Patentschrift enthalten sind.

**Beschreibung**

Die vorliegende Erfindung betrifft Effektpigmente mit einem flachen Kern und mindestens einer Beschichtung, welche Lichtinterferenz herbeiführt und von innen nach aussen eine variable Zusammensetzung aufweist, so dass die Brechungsindizes an der dem Kern zugewandten (Innen-)Seite und an der mit dem Medium, in welchem das Pigment inkorporiert werden soll, in Kontakt kommenden (Aussen-)Seite unterschiedlich sind und in einer bestimmten Relation zu den Brechungsindizes des obengenannten Kerns und des obengenannten Mediums stehen. Die Erfindung betrifft zudem Stoffzusammensetzungen enthaltend solche Pigmente, sowie die Verwendung solcher Pigmente zum Pigmentieren von hochmolekularem organischem Material.

Effektpigmente sind reflektierende flache Teilchen, deren Strahlungsreflexion je nach Winkel zur flachen Oberfläche unterschiedlich hell ist und/oder ein anderes Spektrum aufweist. In einer mit Effektpigmenten lackierten Oberfläche, zum Beispiel, pflegen die Effektpigmentteilchen sich in der Lackierung weitgehend parallel zur Oberfäche zu richten, so dass die von einer fixen weissen Lichtquelle beleuchtete, farbige Lackoberfläche je nach Ansichtswinkel und Beschaffenheit des Effektpigments verschiedene Farben aufweisen kann. Ein hochwertiges Effektpigment soll dem Medium, worin es inkorporiert wird, bei allen Blickwinkeln hochgesättigte Farben verleihen, wobei der Farbunterschied zwischen einer flachen und einer steilen Ansicht visuell möglichst gross sein soll (hohe Goniochromatizität).

Der visuelle Unterschied zwischen zwei Farben wird am besten durch den ΔE*-Wert im L*a*b*-Farbsystem (CIELAB 1986) widergespiegelt. Verschiedene Typen von Effektpigmenten vermögen unterschiedlich grosse Effekte zu verleihen; so ergeben einfache Metallpartikeln, zum Beispiel Aluminiumflocken, hauptsächlich Helligkeitunterschiede (grosse ΔL*), was in Kombination mit transparenten Buntpigmenten zum sogenannten Metalleffekt führt. Gegebenenfalls können die Metallpartikeln mit den transparenten Buntpigmenten wie beispielsweise in US 5,037,475 oder DE 42 11 560 beschrieben auch zu oberflächlich mit Buntpigmenten bedeckten Metallpartikeln kombiniert werden. Eine Metallpartikeln enthaltende gefärbte Lackchicht kann zum Beispiel auch mit einer zusätzlichen transparenten Lackschicht komplementärer Farbe kombiniert werden, wobei wie in EP 0 388 931 beschrieben besonders interessante Effekte erzielt werden.

Anstatt von Metallpartikeln können auch plättchenförmige Pigmente verwendet werden, zum Beispiel Bismuthoxychloride (® MEARLITE Produkte, The Mearl Corp.) oder die in DE-A-33°06 400 offenbarten bunten β-Kupferphthalocyaninpigmente. Auch in diesem Fall sind die in verschiedenen Winkeln reflektierten Farben vor allem in der Helligkeit (L*) unterschiedlich.

Es können weiterhin auch Effektpigmente eingesetzt werden, deren Farbe durch Interferenz verursacht wird. Dabei handelt es sich um Partikeln, welche mit einer dünnen Schicht eines farblosen oder gefärbten Stoffes überzogen sind; der Farbeffekt hängt von der Dicke der Überzugsschicht ab und kann sich sowohl in der Helligkeit (L*) als auch im Farbton (H*) äussern. Die Goniochromatizität kommt dadurch zustande, dass der Lichtweg des Reflexionsstrahles durch die Schicht bei unterschiedlichen Winkeln zur Oberfläche unterschiedlich lang ist, und somit die Phasen der am Kern und an der Oberfläche reflektierten Strahlen verschieden sind.

Interferenzpigmente können aus beliebigen bekannten plättchenförmigen Teilchen hergestellt werden, zum Beispiel aus plättchenförmigen organischen oder anorganischen Buntpigmenten, wie β-Kupferphthalocyanin, 3,4,9,10-Perylentetracarbonsäurediimide, Fluororubine oder α-$Fe_2O_3$, aus Metallschuppen, wie Aluminium-, Kupfer- oder Bronzeschuppen, oder aus Glimmerpartikeln. Darauf werden dünne Schichten aufgebracht, welche zum Beispiel aus Berlinerblau, oder insbesondere aus Metalloxiden, wie $TiO_2$, $Fe_2O_3$, $Cr_2O_3$ oder gemischtmetalligen Oxiden, bestehen können. Solche Pigmente sind dem Fachmann bestens bekannt, beispielsweise aus DE-A-32 07 936, EP-A-0 096 284 oder US-A-5,026,429. Eine besonders wichtige industrielle Bedeutung haben vor allem Glimmer, welche mit farblosen Metalloxiden und gegebenenfalls zusätzlich mit farbigen Metalloxiden beschichtet sind. Letztere Produkte und deren Verwendung als Effektpigmente sind zum Beispiel in EP-A-0 298 604, EP-A-0 388 932 und EP-A-0 402 943 beschrieben.

Es ist letztlich aus EP-A-0 381 047 auch bekannt, dass man plättchenförmige organische Buntpigmente, deren Brechungsindizes deutlich unter 2 liegen, zwecks Anhebung der Lichtreflexion mit anorganischen Oxiden beschichten kann, deren Brechungsindizes über 2 liegen. Veranschaulicht sind Oxide mit Brechungsindizes zwischen 2,4 (Anatas, Magnetit, $ZrO_2$) und 2,8 ($Fe_2O_3$). Beträgt die Schichtdicke mehr als zirka 35 nm, so kommt es zum üblichen, auf Interferenzerscheinungen basierenden Farbenspiel.

Gleichmässig farbige Beschichtungen können zum Beispiel durch Sublimation eines organisches Pigments auf eloxiertes Aluminium (JP Kokai Sho 63-118098) oder durch gleichzeitiges Aufdampfen eines sublimierbaren Farbstoffs und eines farblosen Dielektrikums auf Glas (DE-A-43 41 162) erreicht werden, wobei in letzterem Fall alternierend Farbstoff in aggregierter Form und Dielektrikum Schicht um Schicht aufgedampft werden, so dass der Farbstoff im Dielektrikum eingelagert wird und eine hohe mechanische Stabilität entsteht. Solche Beschichtungen zeigen jedoch auch bei vielen aufeinanderliegenden Schichten im wesentlichen keinen vom Blickwinkel abhängigen Farbeffekt.

Beschichtungen variabler Zusammensetzung auf farblosem Glas sind zum Beispiel aus Phys. Stat. Sol. (A) 140, K81 (1993) bekannt, wobei die optischen Eigenschaften massgeschneidert werden können. Mehrere Schichte können aufeinander angeordnet werden, so dass eine Beschichtung mit periodisch abwechselndem Brechungsindex entsteht. Solche Beschichtungen eignen sich als optische Filter, wobei eine hohe Anzahl von Perioden erwünscht ist, damit die orthogonale Reflexionsbande möglichst schmal wird.

Die Anforderungen an Pigmente steigen jedoch ständig an, so dass die bisherigen Effektpigmente den heutigen hohen Erwartungen nicht ganz zu genügen vermögen, insbesondere in hochwertigen Anwendungen wie beispielsweise Automobil-Lackierungen. So weisen viele organische Buntpigmente, die vom Farbton her erwünscht wären, in Effektpigmentierungen oft eine ungenügende Licht-, Wetter- oder Migrationsbeständigkeit auf, und bei Interferenzpigmenten lässt vor allem bei flachen Ansichtswinkeln die Sättigung (C*) noch zu wünschen übrig.

Ganz überraschend konnten nun dank der weiter unten beschriebenen speziellen Beschichtung Effektpigmente erhalten werden, die den heutigen Anforderungen auch in hochwertigen Anwendungen in besonders hohem Mass genügen. Die erfindungsgemässen Farbeffektpigmente besitzen überlegene optische Eigenschaften, so dass eine inbezug auf Flop, Reflektivität, Goniochromatizität und Sättigung verbesserte Wirkung auftritt. Insbesondere die Sättigung (C*) ist erstaunlich hoch.

Die erfindungsgemässen Effektpigmente zeichnen sich dadurch aus, dass sie eine Beschichtung variabler Zusammensetzung aufweisen. Zusätzlich spielen die Brechungsindizes beider Oberflächen der Beschichtung sowie das Verhältnis dieser Brechungsindizes untereinander, zur Oberfläche des Kerns und gegebenenfalls zum Brechungsindex des Mediums, worin die Pigmente inkorporiert werden, bei bevorzugten Ausführungen eine Rolle.

Die Erfindung betrifft ein Pigment, enthaltend

(a) einen flachen Kern und

(b) mindestens eine auf der Oberfläche des Kerns angebrachte, aus mindestens zwei verschiedenen Stoffen bestehende Beschichtung, dadurch gekennzeichnet, dass

■ die Beschichtung (b) aus $TiO_2$ und mindestens einem weiteren Stoff ausgewählt aus der Gruppe bestehend aus $SiO$, $SiO_2$ und $MgF_2$ besteht und in der senkrecht zu deren Oberfläche stehenden Achse eine im wesentlichen kontinuierlich variable Zusammensetzung aufweist, wobei die Konzentration von $TiO_2$ an der dem Kern (a) abgewandten Oberfläche 100% ist, und
■ die Brechungsindizes der Beschichtung (b) an der dem Kern (a) zugewandten Oberfläche und an der dem Kern (a) abgewandten Oberfläche verschieden sind.

Auf der Beschichtung (b) kann zusätzlich eine Aussenbeschichtung (c) angebracht sein.

Die Beschichtung variabler Zusammensetzung hat zwei Oberflächen, wovon die eine mit dem Kern, und die andere mit einer Aussenbeschichtung oder direkt mit einem äusseren Medium in Kontakt sind. Das äussere Medium kann zum Beispiel Luft sein, wenn das beschichtete Pigment noch als solches im Gebinde lagert, oder kann bevorzugt ein hochmolekulares organisches Material sein, zu dessen Pigmentierung die erfindungsgemässen beschichteten Pigmente allgemein besonders gut geeignet sind,

Die Beschichtung variabler Zusammensetzung besteht aus mindestens zwei verschiedenen Stoffen, und an beiden Oberflächen der Beschichtung ist der Brechungsindex verschieden. Zweckmässig haben mindestens zwei der Besphichtungsstoffe unterschiedliche Brechungsindizes, so dass durch Variation der Zusammensetzung eine Variation des Brechungsindexes sich ergibt. Der Brechungsindexunterschied zwischen beiden Oberflächen der Beschichtung variabler Zusammensetzung beträgt zweckmässig mindestens 0,20, beispielsweise von 0,20 bis 2,00, bevorzugt von 0,30 bis 1,50, besonders bevorzugt von 0,8 bis 1,20. Dabei kann beliebig jede der beiden Oberflächen die höhere Brechung besitzen.

Die Zusammensetzung der Beschichtung (b) ist In der senkrecht zu desser Oberfläche stehende Achse im wesentlich Kontinuierlich variabel. Darunter versteht man, dass die Zusammensetzung der Beschichtung (b) von der dem Kern (a) zugewandten Oberfläche zur dem Kern (a) abgewandten Oberfläche entweder kontinuierlich, oder gegebenenfalls auch stufenweise in kleinen Schritten ändert, wobei die Zusammensetzung zwischen zwei benachbarten Stufen nur wenig ändert, so dass der Brechungsindexunterschied zwischen zwei benachbarten Stufen keine signifikante Lichtbrechung verursacht. Ändert die Konzentration stufenweise, so beträgt der Brechungsindexunterschied zwischen zwei benachbarten Stufen jeweils bevorzugt höchstens 0,30, besonders bevorzugt höchstens 0,20, ganz besonders bevorzugt höchstens 0,10.

Die Linienform des Konzentrationsgradientes [d.h. der Verlauf der Variation der Zusammensetzung] innerhalb der Beschichtung (b) ist im wesentlichen unerheblich, jedoch darf die Veränderung der Konzentration innerhalb der Beschichtung (b) nicht zu abrupt sein. Eine regelmässige, kontinuierliche oder stufenweise Veränderung der Konzentration ist aus praktischen Gründen bevorzugt. Das Gebiet des Konzentrationsgradientes kann von Oberfläche zu Oberfläche reichen, oder besonders bevorzugt zwischen zwei jeweils einheitlichen Oberflächengebieten eingebettet sein, welche zweckmässig mindestens 60 nm voneinander entfernt sind. Ist der Konzentrationsgradient nicht konstant, so soll er bevorzugt den Wert nicht übersteigen, der einer fiktiven linearen Veränderung der Konzentration über eine Schichtdicke von 60 nm entsprechen würde.

Zwischen der dem Kern (a) abgewandten Seite der Beschichtung (b) und dem das erfindungsgemässe Pigment umgebenden äusseren Medium besteht zweckgemäss ebenfalls ein Brechungsindexunterschied, dessen Absolutwert mindestens 0,05, bevorzugt jedoch mindestens 0,20 betragen soll. Besonders bevorzugt beträgt dieser Brechungsindexunterschied mindestens 0,30, besonders bevorzugt mindestens 0,50.

Da Pigmente letztendlich meist in ein hochmolekulares organisches Material zwecks Pigmentierung desselben eingearbeitet werden, ist als äusseres Medium stets der Brechungsindex eines hochmolekularen organischen Materials zu berücksichtigen. Ist es bekannt, in welchem hochmolekularen organischen Material das erfindungsgemässe Pigment eingesetzt werden soll, so beachte man den Brechungsindex dieses hochmolekularen organischen Materials. Ist das Pigment wie durchaus üblich für den Einsatz in verschiedenen Polymeren vorgesehen, so wähle man den Mittelwert zwischen den Extremwerten der Brechungsindizen dieser Polymere. Ist der Einsatzgebiet schwer vorauszusehen oder sogar völlig unbekannt, so nehme man für das äussere Medium einfach einen Wert von 1,52 an, was dem Mittelwert üblicher hochmolekularer organischer Materialien entspricht, deren Brechungsindizes von 1,33 bis 1,71 betragen (J. C. Seferis, Polymer Handbook, 3$^{rd}$ ed., Seite VI/451, J. Wiley & Sons, New York 1989).

An der Grenzfläche zwischen der Kernoberfläche und der dem Kern zugewandten Oberfläche der auf dem Kern angebrachten Beschichtung (b) besteht zweckgemäss gleichermassen ein Brechungsindexunterschied, dessen Absolutwert mindestens 0,05, bevorzugt jedoch mindestens 0,20 betragen soll. Es hat sich zudem herausgestellt, dass die Brechungsindexunterschiede zwischen der dem Kern (a) abgewandten Oberfläche der Beschichtung (b) und dem äusseren Medium und zwischen der dem Kern (a) zugewandten Oberfläche der Beschichtung (b) und der Kernoberfläche vorteilhaft gegenseitig abgestimmt werden sollen. Besonders bevorzugt betragen sowohl der Brechungsindexunterschied zwischen der dem Kern (a) abgewandten Oberfläche der Beschichtung (b) und dem hochmolekularen organischen Material (d), worin das erfindungsmässige Pigment eingebettet ist, als auch der Brechungsindexunterschied zwischen der dem Kern (a) zugewandten Oberfläche der Beschichtung (b) und der Kernoberfläche Absolutwerte von 0,30 bis 1,50, wobei die jeweiligen Brechungsindizes dieser vier Oberflächen in beliebiger Wertreihenfolge zueinander stehen können. Ganz besonders bevorzugt sind beide Brechungsindexunterschiede im Absolutwert etwa gleich gross, worunter insbesondere eine Differenz von 0,00 bis 0,50 verstanden wird.

Für den Zweck der Erfindung genügt bei einem farblosen Material, beispielsweise bei einem hochmolekularen organischen Material oder einem farblosen Metalloxid, der zum Beispiel im zuvor genannten Tabellenwerk zu findende oder vom Hersteller angegebene Brechungsindex $n_D$ für die Natrium D-Linie (589,3 nm), wobei für optisch anisotrope Materialien der durchschnittliche Wert zählt.

Ist ein Material dagegen farbig, so bezieht sich der Brechungsindex auf den mittleren Wert bei der hauptsächlichen Absorptionsbande im sichtbaren Bereich entsprechend der Formel

$$\overline{n_{PEAK}} = \frac{1}{\lambda_2 - \lambda_1} \int_{\lambda_1}^{\lambda_2} n_\lambda \, \partial\lambda \quad (I),$$

worin $\overline{n_{PEAK}}$ der für die Erfindung relevante Brechungsindex ist; $n_\lambda$ der jeweilige Brechungsindex bei der Wellenlänge $\lambda$ ist; und $\lambda_1$ sowie $\lambda_2$ die beiden zur Absorptionsbande des höchsten Absorptionsmaximums im sichtbaren Bereich gehörenden und selbst im sichtbaren Bereich liegenden Wellenlängen sind, zwischen welchen die Absorption [A = -log $(I/I_0)$] mehr als die Hälfte der Absorption beim sichtbaren Absorptionsmaximum $\lambda_{max}$ beträgt. In der Praxis ist es nicht notwendig, Gleichung (I) zu lösen; vielmehr genügt in der Regel die Approximation nach der einfacheren Gleichung

$$\overline{n_{PEAK}} = \frac{n_{\lambda_1} + n_{\lambda_2} + 2n_{\lambda_{max}}}{4} \quad (II),$$

wozu die Brechungsindizes nur bei 3 Wellenlängen zu ermitteln sind.

Für die Ermittlung des Brechungsindexes ist nur der sichtbare Bereich von 400 bis 800 nm entscheidend, das heisst $\lambda_1$, $\lambda_2$ und $\lambda_{max}$ sollen nur Werte von 400 bis 800 nm sein; allfällige Absorptionen im ultravioletten oder infraroten Bereich sind bei der Bestimmung von $\overline{n_{PEAK}}$ jedenfalls zu vernachlässigen.

Besteht die Oberfläche des Kerns aus einem bunten Pigment, so weist sie besonders bevorzugt einen Brechungsindex von 1,20 bis 1,80 bei 800 nm auf, wobei ganz besonders bevorzugt die absolute Differenz zwischen dem Brechungsindex der Kernoberfläche bei 400 nm und dem Brechungsindex der dem Kern zugewandten Oberfläche der auf dem Kern angebrachten Beschichtung (b) von 0,00 bis 0,50 beträgt.

Alle Brechungsangaben beziehen sich in der vorliegenden Erfindung immer auf die Werte bei Raumtemperatur (25°C). Da die Temperaturabhängigkeit im Bereich von 0 bis 100°C für den Zweck der Erfindung in der Regel vernachlässigbar ist, kann der Brechungsindex farbloser Materialien in der Regel einfach Tabellenwerken entnommen werden. Ist für ein farbloses Material kein Brechungsindex bekannt, so kann dieser zum Beispiel mit einem Abbé-Refraktometer bestimmt werden, oder mit Hilfe der Lorentz-Lorentz und Gladstone-Dale Formeln berechnet werden. Sollen Absorptionsspektrum und Brechungsindex der Oberfläche eines zusammengesetzten Kerns bestimmt werden, so wird zweckmässig nicht am bedeckten Kern selbst, sondern gesondert am reinen Bedeckungsmaterial ermittelt.

Der Brechungsindex eines farbigen Materials kann durch Ellipsometrie bestimmt werden, zum Beispiel nach den von R.M.A. Azzam und N.M. Bashara [Ellipsometry and Polarized Light, North Holland Press, Amsterdam and New York (1977)] oder Harland G. Tompkins [A User's Guide to Ellipsometry, Academic Press, Boston (1993)] offenbarten Methoden.

Die Brechungsindizes derjenigen Stoffe, aus welchen die Beschichtung variabler Zusammensetzung besteht, können nach den gleichen Methoden ermittelt werden. Bestehen eine oder beide Oberflächen der Beschichtung variabler Zusammensetzung aus einem Gemisch mehrerer Stoffe, so genügt in der Regel anstelle einer genauen Bestimmung des Brechungsindexes des Gemisches eine einfache Interpolation nach Volumenprozenten der Gemischkomponenten.

Je nachdem, welche Funktion die Aussenbeschichtung (c) versehen soll, kann sie aus verschiedenen Materialien bestehen. Zum Beispiel kann (c) aus einem mindestens teilweise reflektierendem Metall bestehen, beispielsweise aus Ag, Al, Au, Cu, Cr, Ge, Mo, Ni, Si, Ti oder deren Legierungen.

Die Aussenbeschichtung (c) kann aber auch beispielsweise aus einem beliebigen dielektrischen Material bestehen, dessen spezifischer elektrischer Widerstand nach der üblichen Definition mindestens $10^{10}\ \Omega\cdot cm$ beträgt.

Die Aussenbeschichtung (c) besteht gegebenenfalls bevorzugt aus einem Metalloxid oder Metallfluorid, wie zum Beispiel aus $TiO_2$, $ZrO_2$, $SiO$, $SiO_2$, $SnO_2$, $GeO_2$, $ZnO$, $Al_2O_3$, $V_2O_5$, $Fe_2O_3$, $Cr_2O_3$, $MgO$, $MgF_2$, $CuO$ oder $PbTiO_3$, oder einem Gemisch davon. Insbesondere bevorzugt sind solche Metalloxide, welche von in vielen Anwendungen als Lösungsmitteln verwendeten inerten Flüssigkeiten weder gelöst noch geätzt werden. Besonders bevorzugt hat die Aussenbeschichtung (c) einen Brechungsindex, der demjenigen der Beschichtung (b) an derer dem Kern (a) abgewandten Oberfläche möglichst verschieden, jedoch demjenigen des Aussenmediums (d), worin das Pigment gegebenenfalls eingebettet sein kann, möglichst ähnlich ist. Ganz besonders bevorzugt hat die Aussenbeschichtung (c) einen Brechungsindex von 1,33 bis 1,71.

Die Aussenbeschichtung (c) kann die darunter liegenden Beschichtungen vor chemischen oder mechanischen Einflüssen schützen. Sie kann aber auch einen Teil des einfallenden Lichtes reflektieren, oder das einfallende und das vom Kern reflektierte Licht brechen. Welches Material für welche Funktion geeignet ist, ist dem Fachmann bekannt. Die Aussenbeschichtung (c) soll zudem die färberischen Eigenschaften des darunterliegenden erfindungsgemässen Beschichtungssystem zweckmässig nicht beinträchtigen, sondern möglichst erhalten oder sogar noch verbessern. Bevorzugt beträgt deswegen die Dicke der Aussenbeschichtung (c) höchstens 50 nm, besonders bevorzugt höchstens 20 nm.

Der flache Kern ist bevorzugt plättchenförmig mit einer Länge von 3 bis 200 $\mu$m, einer Breite von 3 bis 200 $\mu$m und einer Dicke von 0,1 bis 5 $\mu$m, besonders bevorzugt mit einer Länge von 5 bis 100 $\mu$m, einer Breite von 5 bis 100 $\mu$m und einer Dicke bis 2 $\mu$m. Beim Kern handelt es sich um bekannte Partikeln oder um nach bekannten Verfahren aus bekannten Stoffen herstellbare Partikeln.

Bei den erfindungsgemässen Effektpigmenten kommt es zum Auftreten des erwünschten, überraschenden Effekts nicht darauf an, aus welcher Materialart der flache Kern besteht. Beispielsweise kommen als Kern alle Materialien wie bei den obengenannten bekannten Effektpigmenttypen in Frage, wie reflektierende Metallschuppen, farbige Metalleffektpigmente, flache organische Pigmentpartikel oder mineralische Plättchen, wie zum Beispiel Glimmerpartikel, welche gegebenenfalls beschichtet sein können. Der Kern mag farblos oder farbig sein und kann aus einem einheitlichen Stoff oder einer Stoffzusammensetzung bestehen. Insbesondere kann der Kern aus einem beliebigen flachen Innenkern und einer oder mehreren darauf angebrachten Bedeckungsschichten zusammengesetzt sein, wobei letztere vorzugsweise aus anorganischen Stoffen, Metallen oder Buntpigmentpartikeln bestehen. Beispielsweise kann es sich bei einem zusammengesetzten Kern um ein Glimmer mit einer 10 bis 300 nm dicken Dielektrikumschicht, insbesondere mit einer 10 bis 30 nm dicken Schicht aus $TiO_2$ oder $MgF_2$, handeln.

Bevorzugt ist der Kern aus einem Innenkern und einer oder mehreren darauf angebrachten Bedeckungsschichten zusammengesetzt, wobei die Oberflächenschicht aus einem anorganischen Stoff oder aus einem organischen Buntpigment besteht. Sowohl bei zusammengesetzten als auch bei einheitlichen Kernen sind als Kernoberflächenmaterial besonders bevorzugt Stoffe geeignet, deren Brechungsindizes $n_D$ beziehungsweise $\overline{n_{PEAK}}$ 1,80 und höher sind. Bei Pigmenten ist dabei zu beachten, dass es sich bei bekannten Brechungsindizes oft um Werte bei 589,3 nm handelt, welche vom zuvor definierten, für die vorliegende Erfindung einzig relevanten Brechungsindex im Bereich des sichtbaren Absorptionsmaximums $(\overline{n_{PEAK}})$ sehr verschieden sein können.

Als Kerne kann man auch Partikel verwenden, welche durch die grossflächige, ein- oder mehrschichtige Beschichtung eines folienartiges Materials mit den das Kern bildenden Materialien und anschliessender Abschälung und Zerkleinerung der Beschichtung auf die gewünschte Partikelgrösse, so wie beispielsweise in US 5,135,812 beschrieben, hergestellt werden.

Bei den mindestens zwei Komponenten der Beschichtung variabler Zusammensetzung handelt es sich um Metalloxide oder Metallfluoride $TiO_2$, $SiO$, $SiO_2$ und $MgF_2$, oder deren wasserhaltigen Formen. Die Metalloxide können in beliebigen Kristallmodifikationen vorliegen, beispielsweise Titandioxid als Anatas oder Rutil.

Die Schichtdicke der Beschichtung variabler Zusammensetzung (b) richtet sich unabhängig der Absorptionsfarbe des gegebenenfalls auf der Kernoberfläche vorhandenen Buntpigments je nach gewünschter Reflexionsfarbe des Effektpigments und beträgt bevorzugt von 60 bis 1000 nm, besonders bevorzugt mindestens 100 nm und ganz besonders bevorzugt von 100 bis 500 nm. Mit steigender Schichtdicke wechselt die Reflexionsfarbe in fixer Richtung von gelb über rot und blau nach grün. Übersteigt die Schichtdicke je nach Brechungsindex 200 bis 500 nm, so tritt der meist unerwünschte Effekt auf, dass eine bestimmte Farbe unter mehr als einem Blickwinkel auftreten kann. Mit steigendem Brechungsindex nimmt die geeignete maximale Schichtdicke ab.

Bevorzugt werden beide Oberflächen des Kerns je mit einer Beschichtung variabler Zusammensetzung (b) beschichtet.

Die auf der Oberfläche des Kerns angebrachte, aus mindestens zwei verschiedenen Stoffen bestehende Beschichtung kann nach vom Prinzip her bekannten Verfahren aufgebracht werden, zum Beispiel durch kathodische Pulverisations-, chemische Dampfablagerungs- oder Sol-Gel-Techniken. Solche Verfahren sind zum Beispiel in Appl. Phys. Lett. 63(18), 2511-2513 (1993), J. Phys. Chem. 99, 395-401 (1995) oder in den in der Einführung erwähnten Publikationen, beispielsweise EP-A-0 096 284, EP-A-0 381 047, DE-A-43 41 162 oder Phys. Stat. Sol. (A) 140, K81 (1993), sowie in den darin zitierten weiteren Publikationen, beschrieben. Bevorzugt wird die Beschichtung durch kathodische Pulverisation (sputtering) oder chemische Dampfablagerung (CVD) durchgeführt. Hiernach beziehen sich die zwecks besserer Übersichtlichkeit gewählten Ausdrücke "Dampf", "Gas" und "Bedampfung" vereinfachend immer auf alle Prozesse, schliessen also sinngemäss zum Beispiel auch Plasma oder Reaktionsmischungen ein.

Beschichtungen mit variabler Zusammensetzung können nach den gleichen Verfahren wie homogene Beschichtungen hergestellt werden, wobei als einziges Unterschied zur homogenen Beschichtung jedoch bei der variabler Beschichtung die relative Konzentration der zur Bildung der Beschichtung notwendigen Edukte im Verlauf der Beschichtungsoperation verändert wird. Dies kann auf einfachster Art geschehen, indem zum Beispiel in einem diskontinuierlichen Prozess das Edukt für den zuletzt abzuscheidenden Stoff erst während der Beschichtung zugegeben wird, oder in einem kontinuierlichen Prozess der flache Kern während der Beschichtung von einer ersten Zone, worin die Edukte in einem bestimmten Verhältnis stehen, gegebenenfalls über eine oder mehrere Zwischenzonen zu einer letzten Zone gelangt, worin die Edukte in einem anderen Verhältnis stehen.

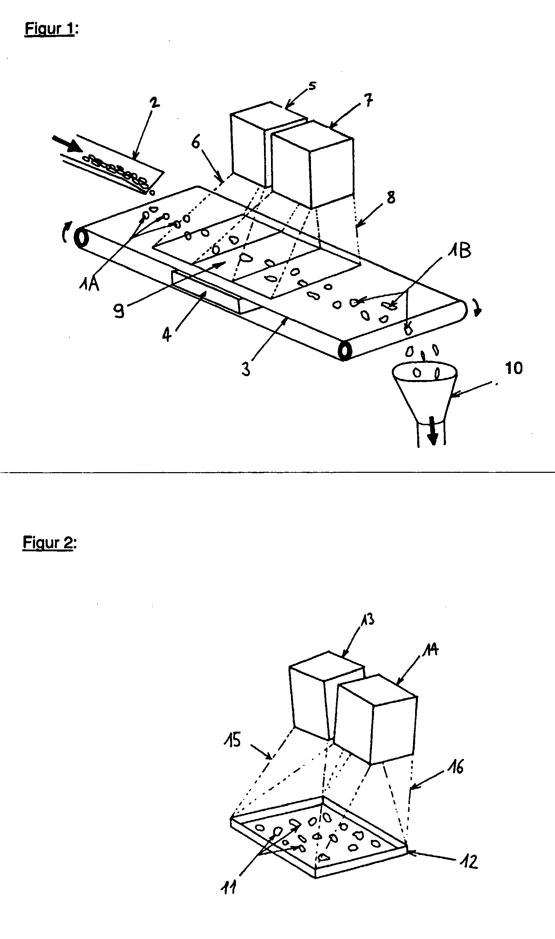

Diese Technik wird bevorzugt in der Art ausgeführt, dass im Bedampfungsverfahren der zu beschichtende flache Kern linear oder zirkular an mindestens zwei Dampfquellen vorbeigeführt wird, deren austretenden Gasgemische verschiedene Stoffzusammensetzungen besitzen. Zweckmässig sollen beide Dampfquellen in einer solchen Distanz zueinander und zu den flachen Kernen stehen, dass beide Gaswolken in Bereich der zu beschichtenden flachen Kerne teilweise überlappen. Besonders bevorzugt werden die zu beschichtenden flachen Kerne massenweise vor zwei fixierten Dampfquellen bewegt, zum Beispiel auf einem vorbeifliessenden Wirbelbett. Als Beispiel, auf welchem die Erfindung keineswegs begrenzt ist, stellt Figur 1 schematisch eine solche Anordnung dar. Der Fachmann wird ohne Mühe unzählige weitere gleichwertige Möglichkeiten erkennen, wie die gleiche Funktion auf äquivalente Art ebenfalls durchgeführt werden kann, wie zum Beispiel chemische Dampfabscheidung im Fliessbettverfahren oder die Beschichtung eines grossflächigen folienartiges Materials mit anschliessender Abschälung und Zerkleinerung der Beschichtung auf die gewünschte Partikelgrösse analog zu US 5,135,812.

In der Anordnung von Figur 1 gelangen die Kernpartikel [1A] von der Zudosierung [2] auf ein Förderband [3], der im Bedampfungsgebiet mit einem Vibrator [4] im Kontakt steht. Sie werden dabei den aus zwei Dampfquellen [5] und [6] erzeugten Gasgemischen [7] und [8] unterschiedlicher Zusammensetzung exponiert, welche im Gebiet [9] teilweise überlappen. Die mit einer Beschichtung variabler Zusammensetzung versehenen Partikel [1 B] werden schliesslich aus dem Bedampfungsbereich durch die Entnahmeeinrichtung [10] entfernt.

Die Bedampfungsbedingungen (Druck, Temperatur, Edukte, Kathodenpotential, usw.) sind an sich bekannt. Die Zusammensetzungen der aus der ersten und der zweiten Dampfquellen austretenden Gasgemische sind so zu wählen, dass die erste Dampfquelle eine Beschichtung mit dem für die Grenzfläche zum Kern gewünschten Brechungsindex, und die zweite Dampfquelle eine Beschichtung mit dem für die Grenzfläche zur Umgebung gewünschten Brechungsindex ergeben. Wenn sich der vorbeigeführte, zu beschichtende flache Kern der ersten Dampfquelle [5] nähert, beginnt die Beschichtung mit dem Stoffgemisch nur aus dieser ersten Dampfquelle, so dass der Brechungsindex an der inneren Grenzfläche zwischen dem flachen Kern und der Beschichtung demjenigen einer nur aus dieser ersten Dampfquelle erzeugten Beschichtung entspricht. Bewegt sich der zu beschichtende flache Kern im Überlappungsgebiet beider Dampfquellen [9], so ändert sich laufend die Zusammensetzung der Beschichtung von der Zusammensetzung der aus der ersten Dampfquelle erzeugten Beschichtung hin zur Zusammensetzung der aus der zweiten Dampfquelle erzeugten Beschichtung. Gelangt der zu beschichtende flache Kern im Gebiet nahe der zweiten Dampfquelle [6], so entspricht schliesslich die Zusammensetzung der Beschichtung derjenigen einer nur aus der zweiten Dampfquelle erzeugten Beschichtung. Bei mehr als zwei Dampfquellen sind die Vorgänge im Prinzip völlig analog.

Die Kontrolle der Aufdampfungsbedingungen kann beispielsweise zeitlich und/oder energiemässig erfolgen. Die benötigte Verdampfungsenergie kann kontinuierlich oder pulsmässig zugeführt werden. Zum Beispiel kann man in einem stationären Verfahren wie in Figur 2 schematisch dargestellt eine Menge flache Kernpartikeln [11] auf einem Behälter [12] mit den aus zwei Dampfquellen [13] und [14] erzeugten Gasgemischen [15] und [16] unterschiedlicher Zusammensetzung bedampfen, deren Zielgebiete vollkommen überlappen, wobei die Anzahl der zu den Dampfquellen [13] und [14] gelangenden Energieimpulse beispielsweise von einem Anfangsverhältnis 2:8 zu einem Endverhältnis 7:3 zeitlich gesteuert kontinuierlich verändert wird. Das Ergebnis ist genauso wie im kontinuierlichen Verfahren von Figur 1 eine Beschichtung variabler Zusammensetzung.

Das erfindungsgemässe Pigment kann mit vorzüglichen Ergebnissen in einem beliebigen hochmolekularen organischen Material (d) zu desser Pigmentierung eingebettet sein. Solche hochmolekulare organische Materialien sind weiter unten beschrieben. Die Menge hochmolekulares organisches Material (d) kann beliebig sein und beträgt beispielsweise von $10^{-4}$ bis $10^4$ Gew.-Teile, bevorzugt von $10^{-3}$ bis $10^3$ Gew.-Teile, bezogen auf 1 Gew.-Teil erfindungsgemässes Pigment {(a)+(b)} oder {(a)+(b)+(c)}. Die erfindungsgemässen Stoffzusammensetzungen können übliche weitere Bestandteile enthalten, beispielsweise Netzmittel oder texturverbessernde Mittel, deren Menge beliebig sein kann, jedoch bevorzugt gesamthaft von 0 bis 30 Gew.-%, bezogen auf das Totalgewicht der Stoffzusammensetzung, beträgt.

Das erfindungsgemässe Pigment {(a)+(b)} oder {(a)+(b)+(c)} wird beispielsweise durch Mischen oder Dispergieren in das hochmolekulare organische Material (d) eingebettet, gegebenenfalls in Gegenwart einer geeigneten inerten Flüssigkeit, welche nach beendeter Dispersion wieder entfernbar ist. Gegebenenfalls kann man dazu als Dispergiergerät zum Beispiel Rühr- oder Walzwerke, oder auch sonstige übliche Mischgeräte verwenden.

Inerte Flüssigkeiten sind zum Beispiel Wasser oder übliche organische Lösungsmittel, zum Beispiel Ether, Alkohole, Ketone, Nitrile, Nitroverbindungen, unsubstituierte oder substituierte aliphatische oder aromatische Kohlenwasserstoffe, oder Gemische derselben. Gegebenenfalls kann man dem Dispersionsgemisch auch einen beliebigen kationischen, anionischen, zwitterionischen oder nichtionischen Netzmittel zusetzen. Die erfindungsgemässen Stoffzusammensetzungen können vom Dispersionsgemisch zum Beispiel durch Filtration oder Eindampfen der inerten Flüssigkeit isoliert werden.

Das hochmolekulare organische Material, zur Pigmentierung dessen die erfindungsgemässen Pigmente oder Stoffzusammensetzungen verwendet werden können, kann natürlicher oder künstlicher Herkunft sein. Es kann sich zum Beispiel um Naturharze, trocknende Öle, Gummi oder Casein oder davon abgewandelte Naturstoffe, wie Chlorkautschuk, ölmodifizierte Alkydharze, Viscose, um Celluloseäther oder Ester, wie Ethylcellulose, Celluloseacetat, Cellulosepropionat, Celluloseacetobutyrat oder Nitrocellulose handeln, insbesondere aber um vollsynthetische organische Polymere (Duroplaste und Thermoplaste), wie sie durch Polymerisation, Polykondensation oder Polyaddition erhalten werden. Aus der Klasse der Polymerisationsharze seien in erster Linie Polyolefine, wie Polyethylen, Polypropylen oder Polyisobutylen, ferner substituierte Polyolefine, wie Polymerisate aus Vinylchlorid, Vinylacetat, Styrol, Acrylnitril, Acrylsäure- oder Methacrylsäureester oder Butadien, sowie Kopolymerisate der erwähnten Monomeren, wie insbesondere ABS oder EVA, genannt.

Aus der Reihe der Polyadditionsharze und Polykondensationsharze seien die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste, die als Lackharze verwendeten Polyester, und zwar sowohl gesättigte, wie zum Beispiel Alkydharze, als auch ungesättigte, wie beispielsweise Maleinatharze, ferner die linearen Polyester und Polyamide, Polyurethane oder Silikone genannt.

Die erwähnten hochmolekularen Verbindungen können einzeln oder in Gemischen, als plastische Massen oder Schmelzen vorliegen. Sie können auch in Form ihrer Monomere oder im polymerisierten Zustand in gelöster Form als Filmbildner oder Bindemittel für Lacke oder Druckfarben vorliegen, wie zum Beispiel Leinölfirnis, Nitrocellulose, Alkydharze, Melaminharze und Harnstoff-Formaldehydharze oder Acrylharze.

Je nach Verwendungszweck erweist es sich als vorteilhaft, die erfindungsgemässen Effektpigmente oder Effektpigmentzusammensetzungen als Toner oder in Form von Präparaten zu verwenden. Je nach Konditionierverfahren oder Applikationszweck kann es von Vorteil sein, dem Effektpigment gewisse Mengen an texturverbessernden Mitteln vor oder nach dem Konditionierprozess zuzufügen, sofern diese keine negative Wirkung bei der Verwendung der Effektpigmente zur Färbung von hochmolekularen organischen Materialien, insbesondere Polyethylen, haben. Als solche kommen insbesondere Fettsäuren mit mindestens 18 C-Atomen, beispielsweise Stearin- oder Behensäure, oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder aliphatische 1,2-Dihydroxy-verbindungen mit 8 bis 22 C-Atomen, wie 1,2-Dodecandiol, ferner modifizierte Kolophoniummaleinatharze oder Fumarsäurekolophoniumharze in Betracht. Die texturverbessernden Mittel werden vorzugsweise in Mengen von 0,1 bis 30 Gew.-%, insbesondere 2 bis 15 Gew.-%, bezogen auf das Endprodukt, zugesetzt.

Die Erfindung betrifft deshalb weiterhin auch eine Stoffzusammensetzung, enthaltend ein obenstehend definiertes Pigment {(a)+(b)} oder {(a)+(b)+(c)} sowie (d) ein hochmolekulares organisches Material. In der Regel ist das Pigment in der Stoffzusammensetzung als eine Vielzahl einzelner Pigmentpartikeln umgeben vom organischen Material (d) enthalten.

Das erfindungsgemässe Pigment {(a)+(b)} oder {(a)+(b)+(c)} kann in einer Menge von 0,01 bis 70 Gew.-%, bezogen auf das hochmolekulare organische Material (d), in der erfindungsgemässen Stoffzusammensetzung enthalten sein. Besitzt das erfindungsgemässe Pigment eine aus einem hochmolekularen organischen Material bestehende Beschichtung (c), so können dieses und das zu pigmentierende hochmolekulare organische Material verschieden oder bevorzugt identisch sein. Sind beide hochmolekulare organische Materialien verschieden, so ist es ratsam, auf gute Kompatibilität derselben zu achten. Welche hochmolekulare organische Materialien untereinander kompatibel sind, ist dem Fachmann gut bekannt. Besonders bevorzugt besitzen in diesem Fall beide hochmolekularen organischen Materialien ähnliche Brechungsindizes.

Wird die erfindungsgemässe Stoffzusammensetzung als pigmentiertes hochmolekulares organisches Material unverdünnt weiterverarbeitet, so beträgt die Menge des erfindungsgemässen Pigments {(a)+(b)} oder {(a)+(b)+(c)} bevorzugt 0,1 bis 10 Gew.-%, bezogen auf das Gesamtgewicht der erfindungsgemässen Stoffzusammensetzung. Wird hingegen die erfindungsgemässe Stoffzusammensetzung als Masterbatch zur Pigmentierung eines weiteren hochmolekularen organischen Materials verwendet, so beträgt die Menge des erfindungsgemässen Pigments {(a)+(b)} oder {(a)+(b)+(c)} bevorzugt 10 bis 50 Gew.-%, bezogen auf das Gesamtgewicht der erfindungsgemässen Stoffzusammensetzung.

Zur Pigmentierung von organischen Materialien können die erfindungsgemässen Effektpigmente oder Effektpigmentzusammensetzungen allein gebraucht werden. Es ist aber ebenfalls möglich, zwecks Erzielung verschiedener Farbtöne oder Farbeffekte den hochmolekularen, organischen Stoffen neben den erfindungsgemässen Effektpigmenten oder Effektpigmentzusammensetzungen andere farbgebende Bestandteile wie Weiss-, Bunt-, Schwarz-oder Effektpigmente in beliebigen Mengen zuzufügen. Werden Buntpigmente im Gemisch mit den erfindungsgemässen Pigmenten oder Stoffzusammensetzungen eingesetzt, so geschieht dies bevorzugt in einer gesamten Menge von 0,1 bis 10 Gew.-%, bezogen auf das hochmolekulare organische Material. Eine besonders hohe Goniochromatizität besitzt die bevorzugte Kombination eines erfindungsgemässen Effektpigments mit einem Buntpigment komplementärer Farbe, wobei Ausfärbungen des Effektpigments und Ausfärbungen des Buntpigments einen Farbtonunterschied ($\Delta H^*$) von 150 bis 210 aufweisen.

Farbwerte beziehen sich auf die CIE L*a*b* (L*C*H*)-Farbkoordinaten für Normlichtart D65 und CIE 1964 10°-Beobachter ($D_{65}^{10°}$). Falls nichts anderes erwähnt, handelt es sich bei Farbkoordinaten um Werte, welche aus dem unter einem Winkel von 8° zur Flächennormalen im Bereich zwischen 300 nm und 800 nm in Schritten von 1 nm, beispielsweise mittels eines ™Lambda 19 Spektralphotometers (Perkin-Elmer) gemessenen Reflexionsspektrum berechnet werden.

Die Pigmentierung der hochmolekularen, organischen Substanzen mit den erfindungsgemässen Pigmenten oder Stoffzusammensetzungen erfolgt beispielsweise derart, dass man ein solches Pigment oder eine solche Stoffzusammensetzung, gegebenenfalls in Form eines Masterbatches, diesen Substraten unter Verwendung von Walzwerken, Mischoder Mahlapparaten zumischt. Das pigmentierte Material wird hierauf nach an sich bekannten Verfahren wie Kalandrieren, Pressen, Strangpressen, Streichen, Giessen oder Spritzgiessen in die gewünschte endgültige Form gebracht. Alle in der Kunststoffindustrie üblichen Zusätze, wie beispielsweise Weichmacher, Füllstoffe oder Stabilisatoren, können in gebräuchlichen Mengen vor oder nach der Einverleibung des Pigments in die Polymere eingearbeitet werden. Insbesondere ist es erwünscht, zur Herstellung von nicht starren Formlingen oder zur Verringerung ihrer Sprödigkeit den hochmolekularen Verbindungen vor der Verformung Weichmacher, zum Beispiel Ester der Phosphorsäure, Phthalsäure oder Sebacinsäure, einzuverleiben.

Zum Pigmentieren von Lacken und Druckfarben werden die hochmolekularen organischen Materialien und die erfindungsgemässen Effektpigmente oder Effektpigmentzusammensetzungen, gegebenenfalls zusammen mit üblichen Zusatzstoffen wie beispielsweise Füllmitteln, anderen Pigmenten, Siccativen oder Weichmachern, in einem gemeinsam organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Bei der Dispergierung eines erfindungsgemässen Effektpigments in das zu pigmentierende hochmolekulare organische Material, sowie bei der Verarbeitung einer erfindungsgemässen Stoffzusammensetzung, werden bevorzugt Bedingungen eingehalten, unter welchen nur relativ schwache Scherkräfte auftauchen, so dass das Effektpigment nicht in kleinere Bruchstücke zerteilt wird. Die zulässige Scherkraft entspricht etwa derjenigen, welche für den flachen Kern (a) zulässig ist, dessen schonende Dispersion in ein hochmolekulares organisches Material dem Fachmann allgemein gut bekannt ist.

Die erhaltenen Färbungen, beispielsweise in Kunststoffen, Lacken oder Drucken, bevorzugt in Lacken oder Drucken, besonders bevorzugt in Lacken, zeichnen sich durch vorzügliche Eigenschaften aus, insbesondere durch hohe Sättigung, hohe Goniochromatizität und ausgezeichneten Echtheiten.

Die Erfindung betrifft dementsprechend auch die Verwendung eines erfindungsgemässen Effektpigments oder einer erfindungsgemässen Effektpigmentzusammensetzung zum Pigmentieren von hochmolekularem organischem Material.

Handelt es sich beim zu pigmentierenden hochmolekularen Material um einen Lack, so handelt es sich insbesondere um einen Speziallack, ganz besonders bevorzugt um einen Automobillack.

Die nachfolgenden Beispiele verdeutlichen die Erfindung:

Beispiel 1: Ein Glasrohr vom Durchmesser 2,54 cm wird mit einer externen Heizung, einem Hochfrequenzgenerator (13,6 MHz) und Zuleitungen für Tetraisopropylorthotitanat (TTIP), Tetraethylorthosilikat (TEOS) und Sauerstoff ($O_2$) ausgerüstet. Ein Stück flaches Glas (zum Beispiel Mikroskop-Abdeckglas) wird ebenfalls in dieses Rohr gestellt. Unter einem konstant gehaltenen, reduziertem Druck von 0,20 mbar und einer externen Temperatur von 170°C mit der Hochfrequenzgenerator mit einer Leistung von 10 W gespiesen, so dass aus den eingeführten Gasen ein Plasma entsteht und sich auf das Stück Glas eine Beschichtung bildet. Die Zufuhr von TTIP, TEOS und $O_2$ wird wie folgt gesteuert:

(a) TTIP und $O_2$ werden gleichzeitig mit je 3 cm$^3$/s während 90 s in die Plasmakammer eingeführt;

(b) während 60 s werden durch Drehen der Ventile simultan der Zufluss von TTIP von 3 auf 0 cm$^3$/s reduziert, und der Zufluss von TEOS von 0 auf 3 cm$^3$/s gesteigert; der Zufluss von Sauerstoff bleibt unverändert bei 3 cm$^3$/s.

(c) TEOS und $O_2$ werden gleichzeitig mit je 3 cm$^3$/s während 13 Min in die Plasmakammer eingeführt.

Dann werden nacheinander die Zufuhr von TEOS und $O_2$ abgestellt, der Hochfrequenzgenerator abgestellt, die Apparatur auf Raumtemperatur abgekühlt und das beschichtete Glasstück herausgenommen.

Die Beschichtung des Glasstücks weist einen tiefenabhängigen Brechungsindex auf. Das Glasstück erscheint visuell gelb. Unter einem Beobachtungswinkel von 8° ($D_{65}^{10°}$) ergibt sich ein Farbwert von L*=25, C*=16 und H*=66.

Beispiel 2: Man verfährt so wie im Beispiel 1, jedoch mit der folgenden, anderen Steuerung der Zufuhr von TTIP, TEOS und $O_2$ :

(a) TTIP und $O_2$ werden gleichzeitig mit je 3 cm$^3$/s während 120 s in die Plasmakammer eingeführt;

(b) während 60 s werden durch Drehen der Ventile simultan der Zufluss von TTIP von 3 auf 0 cm$^3$/s reduziert, und der Zufluss von TEOS von 0 auf 3 cm$^3$/s gesteigert; der Zufluss von Sauerstoff bleibt unverändert bei 3 cm$^3$/s.

(c) TEOS und $O_2$ werden gleichzeitig mit je 3 cm$^3$/s während 30 Min in die Plasmakammer eingeführt.

Die Beschichtung des Glasstücks weist einen tiefenabhängigen Brechungsindex auf, der auf von Titanoxid über Titanoxid/Siliciumoxid nach Siliciumoxid von Innen nach aussen wechselnden Zusammensetzung der Beschichtung zurückzuführen ist. Das Glasstück erscheint visuell blau. Unter einem Beobachtungswinkel von 8° ($D_{65}^{10°}$) ergibt sich ein Farbwert von L*=30, C*=21 und H*=253.

Beispiel 3: Man verfährt so wie im Beispiel 1, jedoch mit der folgenden, anderen Steuerung der Zufuhr von TTIP, TEOS und $O_2$:

(a) TTIP und $O_2$ werden gleichzeitig mit je 3 cm$^3$/s während 120 s in die Plasmakammer eingeführt;

(b) während 60 s werden durch Drehen der Ventile simultan der Zufluss von TTIP von 3 auf 0 cm$^3$/s reduziert, und der Zufluss von TEOS von 0 auf 3 cm$^3$/s gesteigert; der Zufluss von Sauerstoff bleibt unverändert bei 3 cm$^3$/s.

(c) TEOS und $O_2$ werden gleichzeitig mit je 3 cm$^3$/s während 55 Min in die Plasmakammer eingeführt.

Die Beschichtung des Glasstücks weist einen tiefenabhängigen Brechungsindex auf, der auf von Titanoxid über Titanoxid/Siliciumoxid nach Siliciumoxid von Innen nach aussen wechselnden Zusammensetzung der Beschichtung zurückzuführen ist. Das Glasstück erscheint visuell rot. Unter einem Beobachtungswinkel von 8° $\left( D_{65}^{10°} \right)$ ergibt sich ein Farbwert von L*=23, C*=47 und H*=307.

Beispiel 4: Auf ein Stück Flachglas wird bei 250°C /1 mPa eine 230 nm dicke Schicht 2,9-Dichlorchinacridon sublimiert. Dieses Stück dient anstatt des transparenten Flachglases als Unterlage für die weitere Beschichtung. Dann verfährt man analog wie in Beispiel 1, jedoch mit der folgenden, anderen Steuerung der Zufuhr von TTIP, TEOS und $O_2$ :

(a) TEOS und $O_2$ werden gleichzeitig mit je 3 cm$^3$/s während 450 s in die Plasmakammer eingeführt;

(b) während 60 s werden durch Drehen der Ventile simultan der Zufluss von TEOS von 3 auf 0 cm$^3$/s reduziert, und der Zufluss von TTIP von 0 auf 3 cm$^3$/s gesteigert; der Zufluss von Sauerstoff bleibt unverändert bei 3 cm$^3$/s.

(c) TTIP und $O_2$ werden gleichzeitig mit je 3 cm$^3$/s während 40 Min in die Plasmakammer eingeführt.

Das Glasstück erscheint visuell blau. Unter einem Beobachtungswinkel von 8° $\left( D_{65}^{10°} \right)$ ergibt sich ein Farbwert von L*=26, C*=23 und H*=252.

Beispiel 5: In einer Vakuumkammer enthaltend 3,0 mPa Sauerstoff wird eine Glasplatte oberhalb zweier Bedampfungsquellen rotiert, bestehend aus MgF$_2$ in einem thermisch geheizten Wolframtiegel, beziehungsweise TiO$_2$ in einem mit einer Elektronenkanone beschiessbaren, wassergekühlten Kupfertiegel. MgF$_2$ und TiO$_2$ werden gleichzeitig aufgedampft, wobei das Verhältnis beider Stoffe durch stufenweise Steuerung der zugeführten Energie erfolgt. Nacheinander werden folgende Schichten aufgebracht, wobei die Aufdampfung beim Übergang von einer Schicht zur nächsten jedoch nicht unterbrochen wird:

| | Schichtdicke | Zusammensetzung [Vol.-%] | | Brechungsindex |
|---|---|---|---|---|
| Glasplatte | - | - | | 1,5 |
| 1. Schicht | 20 nm | - | MgF$_2$ 100% | 1,38 |
| 2. Schicht | 43 nm | TiO$_2$ 6% | MgF$_2$ 94% | 1,43 |
| 3. Schicht | 30 nm | TiO$_2$ 17% | MgF$_2$ 83% | 1,52 |
| 4. Schicht | 25 nm | TiO$_2$ 40% | MgF$_2$ 60% | 1,71 |
| 5. Schicht | 20 nm | TiO$_2$ 75% | MgF$_2$ 25% | 1,99 |
| 6. Schicht | 20 nm | TiO$_2$ 100% | - | 2,2 |

Unter Beobachtungswinkeln von 8° und 30° $\left( D_{65}^{10°} \right)$ ergeben sich Farbwerte von:

$$8°: \quad L*=61, \quad C*=7, \quad H*=238;$$
$$30°: \quad L*=56, \quad C*=9, \quad H*=261.$$

Beispiel 6: Man verfährt wie im Beispiel 5, jedoch wird auf die Glasplatte zuerst eine 50 nm dicke Schicht aus Titandioxid verdampft. Die weiteren 6 Schichten sind mit denjenigen von Beispiel 5 identisch. Unter Beobachtungswinkeln von 8° und 30° $\left( D_{65}^{10°} \right)$ ergeben sich Farbwerte von:

$$8°: \quad L*=74, \quad C*=20, \quad H*=234;$$
$$30°: \quad L*=67, \quad C*=25, \quad H*=247.$$

Beispiel 7: Man verfährt analog zu Beispiel 5, jedoch werden folgende Schichten aufgebracht:

| | Schichtdicke | Zusammensetzung [Vol.-%] | Brechungsindex |
|---|---|---|---|
| Glasplatte | - | - | 1,5 |

Tabelle fortgesetzt

|  | Schichtdicke | Zusammensetzung [Vol.-%] |  | Brechungsindex |
|---|---|---|---|---|
| 1. Schicht | 40 nm | - | MgF$_2$ 100% | 1,38 |
| 2. Schicht | 43 nm | TiO$_2$ 6% | MgF$_2$ 94% | 1,43 |
| 3. Schicht | 42 nm | TiO$_2$ 17% | MgF$_2$ 83% | 1,52 |
| 4. Schicht | 40 nm | TiO$_2$ 40% | MgF$_2$ 60% | 1,71 |
| 5. Schicht | 40 nm | TiO$_2$ 75% | MgF$_2$ 25% | 1,99 |
| 6. Schicht | 40 nm | TiO$_2$ 100% | - | 2,2 |

Unter Beobachtungswinkeln von 8° und 30° ($D_{65}^{10°}$) ergeben sich Farbwerte von:

8° : L*=57, C*=8, H*=72;
30°: L*=54, C*=8, H*=71.

Beispiel 8: Man verfährt wie im Beispiel 5, jedoch wird auf die Glasplatte zuerst eine 30 nm dicke Schicht aus Titandioxid verdampft. Die weiteren 6 Schichten sind mit denjenigen von Beispiel 5 identisch. Unter Beobachtungswinkeln von 8° und 30° ($D_{65}^{10°}$) ergeben sich Farbwerte von:

8° : L*=69, C*=58, H*=94;
30°: L*=68, C*=49, H*=100.

Beispiel 9: Man verfährt analog zu Beispiel 5, jedoch werden folgende Schichten aufgebracht:

|  | Schichtdicke | Zusammensetzung [Vol.-%] |  | Brechungsindex |
|---|---|---|---|---|
| Glasplatte | — | — |  | 1,5 |
| 1. Schicht | 40 nm | — | MgF$_2$ 100% | 1,38 |
| 2. Schicht | 42 nm | TiO$_2$ 14% | MgF$_2$ 86% | 1,5 |
| 3. Schicht | 39 nm | TiO$_2$ 33% | MgF$_2$ 67% | 1,65 |
| 4. Schicht | 39 nm | TiO$_2$ 67% | MgF$_2$ 33% | 1,93 |
| 5. Schicht | 40 nm | TiO$_2$ 86% | MgF$_2$ 14% | 2,09 |
| 6. Schicht | 20 nm | TiO$_2$ 100% | — | 2,2 |

Unter Beobachtungswinkeln von 8° und 30° ($D_{65}^{10°}$) ergeben sich Farbwerte von:

8° : L*=42, C*=21 , H*=295;
30°: L*=38, C*=22, H*=308.

Beispiel 10: Man verfährt wie im Beispiel 7, jedoch wird auf die Glasplatte zuerst eine 30 nm dicke Schicht aus Titandioxid verdampft. Die weiteren 6 Schichten sind mit denjenigen von Beispiel 7 identisch. Unter Beobachtungswinkeln von 8° und 30° ($D_{65}^{10°}$) ergeben sich Farbwerte von:

8°: L*=43, C*=64, H*=325;
30°: L*=44, C*=47, H*=335.

Beispiel 11: Man verfährt analog zu Beispiel 5, jedoch werden folgende Schichten aufgebracht:

|  | Schichtdicke | Zusammensetzung [Vol.-%] |  | Brechungsindex |
|---|---|---|---|---|
| Glasplatte | - | - |  | 1,5 |
| 1. Schicht | 60 nm | - | MgF$_2$ 100% | 1,38 |
| 2. Schicht | 63 nm | TiO$_2$ 14% | MgF$_2$ 86% | 1,5 |
| 3. Schicht | 57 nm | TiO$_2$ 33% | MgF$_2$ 67% | 1,65 |
| 4. Schicht | 55 nm | TiO$_2$ 67% | MgF$_2$ 33% | 1,93 |
| 5. Schicht | 59 nm | TiO$_2$ 86% | MgF$_2$ 14% | 2,09 |
| 6. Schicht | 60 nm | TiO$_2$ 100% | - | 2,2 |

Unter Beobachtungswinkeln von 8° und 30° $\left( D_{65}^{10°} \right)$ ergeben sich Farbwerte von:

8° :    L*=51,    C*=10,    H*=174;
30°:    L*=46,    C*=11,    H*=200.

Beispiel 12: Man verfährt wie im Beispiel 7, jedoch wird auf die Glasplatte zuerst eine 30 nm dicke Schicht aus Titandioxid verdampft. Die weiteren 6 Schichten sind mit denjenigen von Beispiel 7 identisch. Unter verschiedenen Beobachtungswinkeln von 8° bis 60° $\left( D_{65}^{10°} \right)$ ergeben sich Farbwerte von:

8° :    L*=64,    C*=53,    H*=150;
15°:    L*=64,    C*=53,    H*=149;
30°:    L*=58,    C*=50,    H*=169;
45°:    L*=47,    C*=41,    H*=205;
60°:    L*=36,    C*=31,    H*=269.

Beispiel 13: Man verfährt analog zu Beispiel 5, jedoch werden folgende Schichten aufgebracht:

|  | Schichtdicke | Zusammensetzung [Vol.-%] |  | Brechungsindex |
|---|---|---|---|---|
| Glasplatte | - | - |  | 1,5 |
| 1. Schicht | 50 nm | Al |  |  |
| 2. Schicht | 30 nm | TiO$_2$ |  | 2,2 |
| 3. Schicht | 60 nm | - | MgF$_2$ 100% | 1,38 |
| 4. Schicht | 63 nm | TiO$_2$ 14% | MgF$_2$ 86% | 1,5 |
| 5. Schicht | 57 nm | TiO$_2$ 33% | MgF$_2$ 67% | 1,65 |
| 6. Schicht | 57 nm | TiO$_2$ 67% | MgF$_2$ 33% | 1,93 |
| 7. Schicht | 62 nm | TiO$_2$ 86% | MgF$_2$ 14% | 2,09 |
| 8. Schicht | 20 nm | TiO$_2$ 100% | - | 2,2 |

Unter Beobachtungswinkeln von 8° und 30° $\left( D_{65}^{10°} \right)$ ergeben sich Farbwerte von:

8°:    L*=94,    C*=14,    H*=73;
30°:    L*=95,    C*=24,    H*=107.

Beispiel 14: Man verfährt analog zu Beispiel 5, jedoch werden folgende Schichten aufgebracht:

|             | Schichtdicke | Zusammensetzung [Vol.-%] |           | Brechungsindex |
|-------------|--------------|---------------|-----------|----------------|
| Glasplatte  | -            | -             |           | 1,5            |
| 1. Schicht  | 50 nm        | Ti            |           |                |
| 2. Schicht  | 30 nm        | $TiO_2$       |           | 2,2            |
| 3. Schicht  | 20 nm        | -             | $MgF_2$ 100% | 1,38        |
| 4. Schicht  | 42 nm        | $TiO_2$ 6%    | $MgF_2$ 94%  | 1,43        |
| 5. Schicht  | 42 nm        | $TiO_2$ 17%   | $MgF_2$ 83%  | 1,52        |
| 6. Schicht  | 42 nm        | $TiO_2$ 40%   | $MgF_2$ 60%  | 1,71        |
| 7. Schicht  | 41 nm        | $TiO_2$ 75%   | $MgF_2$ 25%  | 1,99        |
| 8. Schicht  | 20 nm        | $TiO_2$ 100%  | -            | 2,2         |

Unter einem Beobachtungswinkel von 8° ergibt sich ein Farbwert von:
L*=66, C*=40 und H*=15.
Beispiel 15: Man verfährt analog zu Beispiel 5, jedoch verwendet man als Zielmaterial anstatt der Glasplatte ein 10x30 cm grosses Stück 74 $\mu$m dicke Celluloseacetatfolie (AC311075, Goodfellow Inc.). Darauf werden folgende Schichten aufgebracht:

|                 | Schichtdicke | Zusammensetzung [Vol.-%] |           | Brechungsindex |
|-----------------|--------------|---------------|-----------|----------------|
| Celluloseacetat | —            | —             |           | —              |
| 1. Schicht      | 40 nm        | $TiO_2$ 100%  | —         | 2,2            |
| 2. Schicht      | 40 nm        | $TiO_2$ 75%   | $MgF_2$ 25%  | 1,99        |
| 3. Schicht      | 40 nm        | $TiO_2$ 40%   | $MgF_2$ 60%  | 1,71        |
| 4. Schicht      | 42 nm        | $TiO_2$ 17%   | $MgF_2$ 83%  | 1,52        |
| 5. Schicht      | 43 nm        | $TiO_2$ 6%    | $MgF_2$ 94%  | 1,43        |
| 6. Schicht      | 40 nm        | —             | $MgF_2$ 100% | 1,38        |
| 7. Schicht      | 80 nm        | $TiO_2$ 100%  | —         | 2,2            |
| 8. Schicht      | 40 nm        | —             | $MgF_2$ 100% | 1,38        |
| 9. Schicht      | 43 nm        | $TiO_2$ 6%    | $MgF_2$ 94%  | 1,43        |
| 10. Schicht     | 42 nm        | $TiO_2$ 17%   | $MgF_2$ 83%  | 1,52        |
| 11. Schicht     | 40 nm        | $TiO_2$ 40%   | $MgF_2$ 60%  | 1,71        |
| 12. Schicht     | 40 nm        | $TiO_2$ 75%   | $MgF_2$ 25%  | 1,99        |
| 13. Schicht     | 40 nm        | $TiO_2$ 100%  | —         | 2,2            |

Dann wird die Folie bei Raumtemperatur in einem mit Wasser gefüllten Ultraschallbad behandelt, bis das Celluloseacetat vollständig gelöst ist. Die erhaltene Suspension wird filtriert, mit Wasser gewaschen und getrocknet. Man erhält ein gelbes Pigmentpulver, welches aus einem 80 nm dicken Kern aus $TiO_2$ und einer beidseitigen Beschichtung analog zu Beispiel 7 besteht.
Beispiele 16-22: Man verfährt vom Prinzip her analog zu Beispiel 15 und vom Schichtaufbau her analog zu den Beispielen 1-5, 9 und 11, ersetzt jedoch die Schichten 6 bis 1 sowie 8 bis 13 von Beispiel 15 jeweils symmetrisch um den Kern durch Beschichtungen analog den Beispielen 1-5, 9 und 11.
Beispiele 23-28: Man verfährt vom Prinzip her analog zu Beispiel 15 und vom Schichtaufbau her analog zu den Beispielen 6, 8, 10, 12, 13 und 14, ersetzt jedoch die Schichten 6 bis 1 sowie 8 bis 13 von Beispiel 15 jeweils symmetrisch um den Innenkern durch Beschichtungen analog den Schichten 2-7 der Beispiele 6, 8, 10 und 12, beziehungsweise analog den Schichten 2-8 der Beispiele 13 und 14, sowie die Schicht 7 von Beispiel 15 durch die erste Schicht der Beispiele 6, 8, 10, 12, 13 und 14.

Beispiel 29: In einem Dispergator (® Dispermat) werden zusammen während 60 Minuten bei 1500 U/Min folgende Lackkomponenten dispergiert:

| | | |
|---|---|---|
| 1,0 g | des nach Beispiel 15 erhaltenen Pigmentes; | |
| 13,4 g | CAB-Lösung bestehend aus | |
| | 41.0 | Gew.-Teilen Celluloseacetobutyrat 20%ig in Butanol/Xylol 2:1 (® CAB 531.1, Eastman Chem.) |
| | 1.5 | Gew.-Teilen Zirkoniumoctoat, |
| | 18.5 | Gew.-Teilen ® Solvesso 150* (ESSO), |
| | 21.5 | Gew.-Teilen Butylacetat und |
| | 17.5 | Gew.-Teilen Xylol; |
| 5,0 g | Polyesterharz (® Dynapol H700, Dynamit Nobel); und | |
| 0,6 g | Melaminharz (® Maprenal MF 650, Hoechst). | |

Der so erhaltenen Lack wird mit einem Filmziehgerät (Nassfilmdicke 100 $\mu$m) auf eine geeignete Unterlage (schwarz/weiss gestreiftes Karton, Leneta Co.) appliziert, und nach einer Abdunstzeit von 30 Min bei Raumtemperatur 30 Minuten bei 130°C eingebrannt.

Man erhält eine gelbe, brillante Färbung mit goniochromatischem Effekt sowie ausgezeichneter Licht- und Wetterbeständigkeit.

## Patentansprüche

1.  Pigment, enthaltend

    (a) einen flachen Kern und
    (b) mindestens eine auf der Oberfläche des Kerns angebrachte, aus mindestens zwei verschiedenen Stoffen bestehende Beschichtung, **dadurch gekennzeichnet, dass** die Beschichtung (b) aus $TiO_2$, und mindestens einem weiteren Stoff ausgewählt aus der Gruppe bestehend aus $SiO$, $SiO_2$ und $MgF_2$ besteht und in der senkrecht zu deren Oberfläche stehenden Achse eine im wesentlichen kontinuierlich variable Zusammensetzung aufweist, wobei die Konzentration von $TiO_2$ an der dem Kern (a) abgewandten Oberfläche 100% ist und die Brechungsindizes der Beschichtung (b) an der dem Kern (a) zugewandten Oberfläche und an der dem Kern (a) abgewandten Oberfläche verschieden sind.

2.  Pigment nach Anspruch 1, enthaltend
    (c) eine auf der Beschichtung (b) zusätzlich angebrachte Aussenbeschichtung,

3.  Pigment nach Anspruch 1, worin der Brechungsindexunterschied zwischen der Kernoberfläche und der dem Kern zugewandten Oberfläche der aus mindestens zwei verschiedenen Stoffen bestehende Beschichtung (b) mindestens 0,05 beträgt.

4.  Pigment nach Ansprch 1, worin der Kern aus einem reflektierenden Metallschuppen, einem farbigen Metalleffektpigment, einer flachen organischen Pigmentpartikel oder einem mineralischen Plättchen besteht.

5.  Pigment nach Anspruch 4, worin das mineralische Plättchen ein Glimmerpartikel ist.

6.  Pigment nach Anspruch 1, worin der Kern plättchenförmig ist, mit einer Länge von 3 bis 200 $\mu$m, einer Breite von 3 bis 200 $\mu$m und einer Dicke von 0,1 bis 5 $\mu$m.

7.  Pigment nach Anspruch 1, worin die Oberfläche des Kerns aus einem bunten Pigment besteht und einen Brechungsindex von 1,20 bis 1,80 bei 800 nm aufweist.

8.  Pigment nach Anspruch 7, worin die absolute Differenz zwischen dem Brechungsindex der Kernoberfläche bei 400 nm und dem Brechungsindex der dem Kern zugewandten Oberfläche der auf dem Kern angebrachten Beschichtung (b) von 0,00 bis 0,50 beträgt.

**9.** Pigment nach Anspruch 1, worin die Beschichtung (b) eine Schichtdicke von 60 bis 1000 nm besitzt.

**10.** Verwendung eines Pigments nach Anspruch 1 zum Pigmentieren von hochmolekularem organischem Material.

**11.** Stoffzusammensetzung, enthaltend ein Pigment nach Anspruch 1 sowie (d) ein hochmolekulares organisches Material.

**12.** Verwendung einer Stoffzusammensetzung nach Anspruch 11 zum Pigmentieren von hochmolekularem organischem Material.

**Claims**

**1.** A pigment comprising

(a) a flat core and
(b) at least one coating consisting of at least two different substances that is applied to the surface of the core,

wherein the coating (b) consists of $TiO_2$ and at least one further substance selected from the group consisting of SiO, $SiO_2$ and $MgF_2$ and has a substantially continuously variable composition in the axis lying perpendicular to its surface, the concentration of $TiO_2$ at the surface remote from the core (a) being 100 %, and
the refractive indices of the coating (b) at the surface facing the core (a) and at the surface remote from the core (a) are different.

**2.** A pigment according to claim 1, comprising
(c) an outer coating additionally applied to the coating (b).

**3.** A pigment according to claim 1, wherein the difference in refractive index between the surface of the core and the core-facing surface of the coating (b) consisting of at least two different substances is at least 0.05.

**4.** A pigment according to claim 1, wherein the core consists of a reflective metal flake, a coloured metallic-effect pigment, a flat organic pigment particle or a mineral platelet.

**5.** A pigment according to claim 4, wherein the mineral platelet is a mica particle.

**6.** A pigment according to claim 1, wherein the core is plate-like and has a length of from 3 to 200 $\mu$m, a width of from 3 to 200 $\mu$m and a thickness of from 0.1 to 5 $\mu$m.

**7.** A pigment according to claim 1, wherein the surface of the core consists of a coloured pigment and has a refractive index of from 1.20 to 1.80 at 800 nm.

**8.** A pigment according to claim 7, wherein the absolute difference between the refractive index of the surface of the core at 400 nm and the refractive index of the core-facing surface of the coating (b) applied to the core is from 0.00 to 0.50.

**9.** A pigment according to claim 1, wherein the coating (b) has a layer thickness of from 60 to 1000 nm.

**10.** The use of a pigment according to claim 1 in the pigmenting of high molecular weight organic material.

**11.** A substance composition comprising a pigment according to claim 1 and (d) a high molecular weight organic material.

**12.** The use of a substance composition according to claim 11 in the pigmenting of high molecular weight organic material.

**Revendications**

1. Pigment, contenant

   (a) un noyau plat et
   (b) au moins un revêtement déposé sur la surface du noyau, composé d'au moins deux substances différentes,

   **caractérisé en ce que** le revêtement (b) se compose de $TiO_2$ et d'au moins une autre substance choisie dans le groupe constitué par SiO, $SiO_2$ et $MgF_2$ et **en ce qu'**il présente, sur l'axe perpendiculaire à sa surface, une composition variable essentiellement continue, dans laquelle la concentration en $TiO_2$ au niveau de la surface opposée au noyau (a) est de 100%, et
   les indices de réfraction du revêtement (b) au niveau de la surface tournée vers le noyau (a) et au niveau de la surface opposée au noyau (a) sont différents.

2. Pigment selon la revendication 1, contenant (c) un revêtement externe déposé en plus sur le revêtement (b).

3. Pigment selon la revendication 1, dans lequel la différence d'indice de réfraction entre la surface du noyau et la surface tournée vers le noyau du revêtement (b) composé d'au moins deux substances différentes est d'au moins 0,05.

4. Pigment selon la revendication 1, dans lequel le noyau est composé d'une écaille métallique réfléchissante, d'un pigment coloré à effet métallisé, d'une particule de pigment organique plat ou d'une paillette minérale.

5. Pigment selon la revendication 4, dans lequel la paillette minérale est une particule de mica.

6. Pigment selon la reveridication 1, dans lequel le noyau a la forme d'une paillette d'une longueur de 3 à 200 $\mu$m, d'une largeur de 3 à 200 $\mu$m et d'une épaisseur de 0,1 à 5 $\mu$m.

7. Pigment selon la revendication 1, dans lequel la surface du noyau est composée d'un pigment coloré et présente un indice de réfraction de 1,20 à 1,80 à 800 nm.

8. Pigment selon la revendication 7, dans lequel la différence absolue entre l'indice de réfraction de la surface du noyau à 400 nm et l'indice de réfraction de la surface tournée vers le noyau du revêtement (b) déposé sur le noyau va de 0,00 à 0,50.

9. Pigment selon la revendication 1, dans lequel le revêtement (b) possède une épaisseur de couche de 60 à 1000 nm.

10. Utilisation d'un pigment selon la revendication 1 pour pigmenter une matière organique à haute masse moléculaire.

11. Composition de substances, contenant un pigment selon la revendication 1 ainsi que (d) une matière organique à haute masse moléculaire.

12. Utilisation d'une composition de substances selon la revendication 11 pour pigmenter une matière organique à haute masse moléculaire.

**Figur 1:**

**Figur 2:**